# EUROPEAN PATENT APPLICATION

(11) **EP 2 624 355 A1**
(43) Date of publication of application: **07.08.2013**
(21) Application number: 13152078.5
(22) Date of filing: 21.01.2013
(51) Int. Cl.: H01M 8/24, H01M 8/02, H01M 8/12

(54) **Fuel cell stack having interlocking features to enhance adhesion of glass seal to sealing surfaces.**

(30) Priority: 31.01.2012 US 201213362335
(71) Applicant: Delphi Technologies, Inc., Troy, MI 48007 (US)
(72) Inventor: De Rose, Anthony J., Rochester, NY 14612 (US); Mukerjee, Subhasish, Horsham, Sussex RH122JS (GB); Bassett, Ray, Webster, NY 14580 (US); Haltiner, Jr. Karl Jacob, Fairport, NY 14450 (US)
(74) Representative: Robert, Vincent

(57) **Abstract**

A solid oxide fuel cell (SOFC) stack having a glass seal sandwiched between the sealing surfaces of adjacent cassettes, in which at least one cassette includes means for interlocking the glass seal onto the sealing surface of the cassette for improved adhesion and durability of the glass seal. The at least one cassette includes a plurality of perforations configured to receive and lock onto a portion of the glass seal. At least one of the perforations includes a through-hole having an exterior opening on the sealing surface and an interior opening on the interior surface of the cassette. A portion of the glass seal is received in the perforation forming a glass column in the through-hole and a flared glass end on the interior surface surrounding the interior opening. The flared glass end cooperates with the glass column to interlock the glass seal onto the cassette's sealing surface.

## Description

### TECHNICAL FIELD OF INVENTION

The present disclosure relates to a fuel cell stack having a glass seal; more specifically, to a fuel cell stack having mechanical means to enhance adhesion of a glass seal to the sealing surfaces of the fuel stack.

### BACKGROUND OF INVENTION

Fuel cells are used to produce electricity when supplied with fuels containing hydrogen and an oxidant such as air. A typical fuel cell includes an ion conductive electrolyte layer sandwiched between an anode layer and a cathode layer. There are several different types of fuel cells known in the art; amongst these are solid oxide fuel cells (SOFC). SOFC are regarded as highly efficient electrical power generator that produces high power density with fuel flexibility.

In a typical SOFC, air is passed over the surface of the cathode layer and a reformate fuel is passed over the surface of the anode layer opposite that of the cathode layer. Oxygen ions from the air migrate from the cathode layer through the dense electrolyte to the anode layer in which it reacts with the hydrogen and CO in the fuel, forming water and CO2 and thereby creating an electrical potential between the anode layer and the cathode layer of about 1 volt.

Each individual SOFC is mounted within a metal frame, referred to in the art as a retainer frame, to form a cell-retainer frame assembly. The individual cell-retainer frame assembly is then joined to a metallic separator plate, also known as an interconnector plate, to form a fuel cell cassette. Multiple cassettes are stacked in series with a seal disposed between the sealing surfaces of each cassette to form a SOFC stack. The seal for SOFC stacks requires special properties such as a coefficient of thermal expansion (CTE) comparable to those of the mating components of the SOFC stacks, a suitable viscosity to fill any gaps in the sealing surfaces of the cassettes, ability to maintain a hermetic seal at operating temperatures of about 500 °C - 1000°C, good chemical stability, and long term sustainability.

Typical seals utilized for SOFC stack sealing applications are formed from an alkaline earth aluminosilicate glass, such as a barium-calcium-aluminosilicate based glass, also known as G-18 glass, developed by Pacific Northwest National Laboratory (PNNL). G-18 glass provides a seal material that offers high electrical resistively, high coefficient of thermal expansion, high glass transition temperature, and good chemical stability. Another known type of seals for SOFC stack sealing applications are composite glass seals, which are formed from glass materials mixed with fibers to increase the structural integrity of the glass matrix.

One of the disadvantages of the known glass seals is that the glass matrix crystallizes over time at sustained high temperature operating conditions and repeated thermal cycling of the SOFC stack. As the glass crystallizes, it tends to become prone to form microscopic fractures along the interface of the glass seal and sealing surfaces of the cassettes; thereby resulting in potential air and fuel leaks, especially in high stress areas of the SOFC stack.

Based on the foregoing, there is a long felt need for improved adhesion strength between the glass seal and the sealing surfaces of the cassettes. There is a further need for the glass seal joining adjacent cassettes to be mechanically stable under long-term operation and thermal cycling conditions.

### SUMMARY OF THE INVENTION

The present invention relates to a solid oxide fuel cell (SOFC) stack having a glass seal sandwiched between the sealing surfaces of adjacent cassettes, in which at least one cassette includes means for interlocking the glass seal onto the sealing surface for improved adhesion and durability of the glass seal.

The SOFC stack includes a first cassette having a first cassette portion defining a first cassette sealing surface and a second cassette having a second cassette portion defining a second cassette sealing surface complementary to the first cassette sealing surface. The second cassette is disposed proximate to the first cassette such that the second cassette sealing surface is oriented toward and immediately adjacent to the first cassette sealing surface. A glass seal is disposed between and onto the first and second cassette sealing surfaces, thereby joining the first cassette to the second cassette.

The first cassette portion defines a plurality of perforations configured to receive a portion of the glass seal to interlock the glass seal to the first cassette sealing surface. At least one of the perforations includes through-hole having an exterior opening on the exterior sealing surface and an interior opening on the interior surface of the cassette. A portion of the glass seal is received in the perforation forming a glass column in the through-hole and a flared glass end about the interior surface surrounding the interior opening. The flared glass end cooperates with the glass column to interlock the glass seal onto the cassette's sealing surface.

One advantage of perforations through the cassette sealing portion is that the through-holes provide additional surface area for the adhesion of the glass seal. Another advantage is that the flared glass ends interlocks the glass seal onto the sealing surfaces. Still another advantage is that the interlocked glass seal distributes the joint stress though a greater area of the sealing surfaces, thereby improving adhesion strength and increasing mechanically stability under long-term operation and thermal cycling conditions of the SOFC stack.

Further features and advantages of the invention will appear more clearly on a reading of the following detailed description of an embodiment of the invention, which is given by way of non-limiting example only and with reference to the accompanying drawings.

### BRIEF DESCRIPTION OF DRAWINGS

This invention will be further described with reference to the accompanying drawings in which:

Fig. 1 shows an exploded isometric drawing of a portion of a SOFC stack employing a plurality of single-cell cassettes.

Fig. 2 shows a partial cross-section of three adjacent cassettes having mechanical means to enhance the adhesion of the glass seals to the sealing surfaces of the adjacent cassettes.

Figs. 3 through 5 show alternative embodiments of the mechanical means to enhance the adhesion of the glass seal between two adjacent cassettes.

Figs. 3A through 5A show detail views of the alternative embodiments shown in Figs. 3 through 5, respectively.

Fig. 6 is an exploded partial perspective view of the embodiment shown in Fig. 2.

### DETAILED DESCRIPTION OF INVENTION

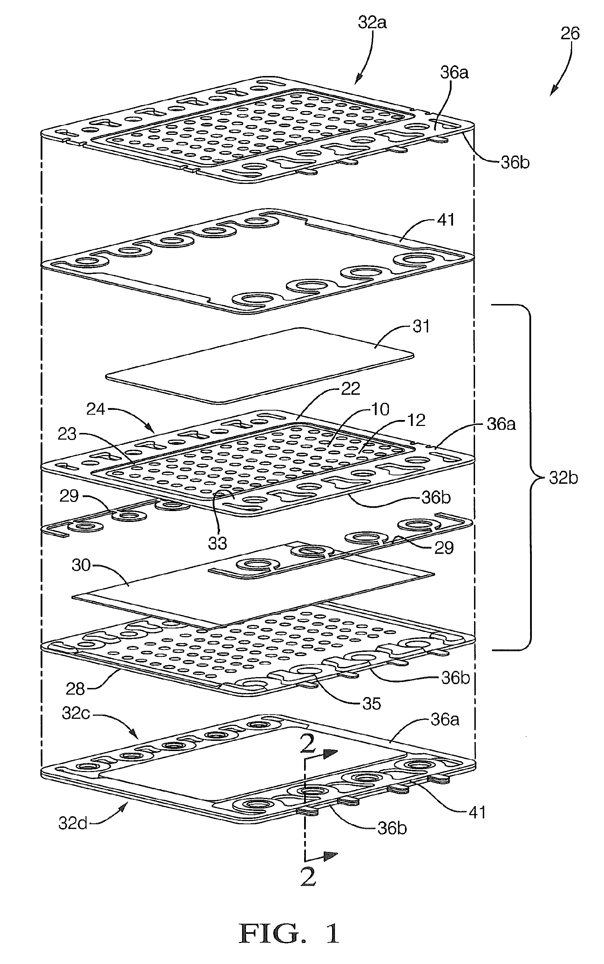

Referring to Figs. 1 through 6 is a solid oxide fuel cell (SOFC) stack 26 having a glass seal 41, such as an alkaline earth aluminosilicate (AEAS) glass, sandwiched between the sealing surfaces 36a, 36b of adjacent cassettes 32a, 32b, 32c, 32d. The cassettes 32a, 32b, 32c, 32d include means for interlocking the glass seal 41 onto the sealing surfaces 36a, 36b for improved adhesion and durability of the glass seal 41.

Shown in Fig. 1 an exploded isometric drawing of a portion of the SOFC stack 26 employing a plurality of single-cell cassettes 32a, 32b, 32c, 32d. The first and second cassettes 32a, 32b and the glass seal 41 therebetween are shown spaced apart from each other. For illustrative purposes, the second cassette 32b is shown in an exploded view to detail the components that similarly form each of the cassettes 32a, 32b, 32c, 32d. The third and fourth cassettes 32c, 32d are shown jointly sealed to each other with the glass seal 41 sandwiched therebetween.

At the heart of each of the cassettes 32a, 32b, 32c, 32d, is a fuel cell 10 comprising of an electrolyte layer sandwiched between a cathode layer and an anode layer. The fuel cell 10 is assembled onto a picture frame window 23 defined by a retainer frame plate 22, thereby forming a cell-retainer frame assembly 24. An intermediate process joins together the cell-retainer frame assembly 24, anode spacers 29, an anode interconnect 30, a cathode interconnect 31, and a separator plate 28 to form the individual cassettes. A plurality of cassettes 32a, 32b, 32c, 32d are then stacked in series to form the SOFC stack 26.

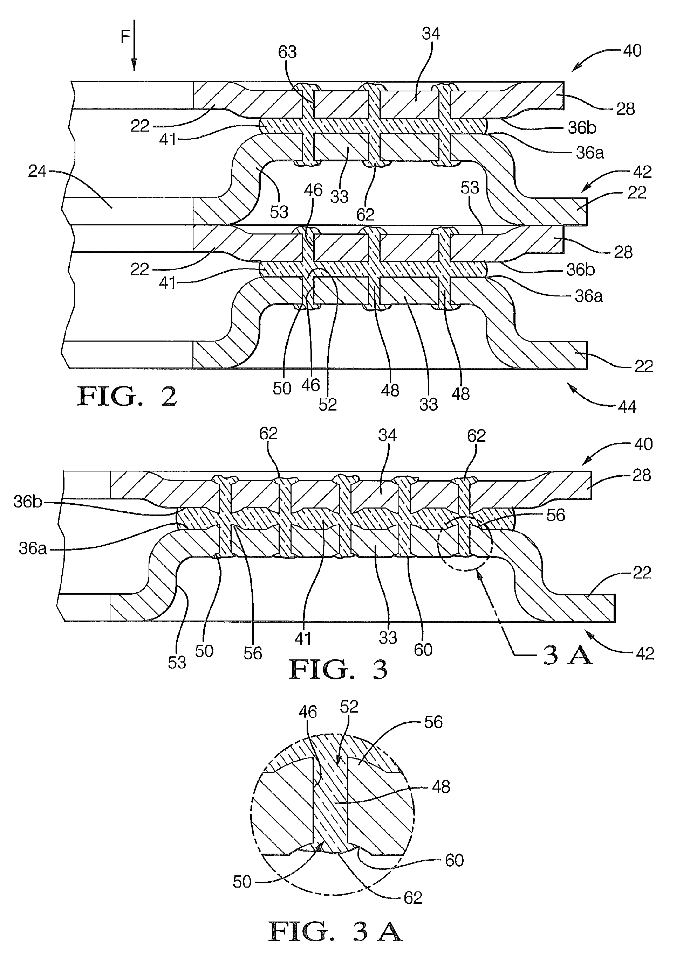

The retainer frame plate 22 and the separator plate 28 may be manufactured from a metallic substrate such as stainless steel. The retainer frame plate 22 includes a retainer plate perimeter portion 33 that defines a retainer plate sealing surface 36a. Similarly, the separator plate 28 includes a separator plate perimeter portion 34 that defines a separator plate sealing surface 36b. The retainer plate sealing surface 36a faces in a direction opposite that of the separator plate sealing surface 36b. During the assembly of the cassettes 32a, 32b, 32c, 32d into the SOFC stack 26, the retainer plate sealing surface 36a of each cassette is oriented toward and is complementary in shape to the separator plate sealing surface 36b of the immediate adjacent cassette to which it is joined. An uncured glass seal composite, in the form of a paste or tape, is inserted between the retainer plate sealing surfaces 36a and corresponding separator plate sealing surfaces 36b of adjacent cassettes. The assembled SOFC stack 26 is then heated treated at a sufficient time and temperature to cure the glass seal composite into a compliant glass seal 41. Shown in Figs. 2 through 5, the perimeter portions 33, 34 of the retainer frame plate 22 and separator plate 28, respectively, may include mechanical features that cooperate with the glass seal composite as it cures during the heat treatment process resulting in an interlocking compliant glass seal 41.

For illustrative purposes, Fig. 2 shows a partial cross-section of a center cassette 42 sandwiched between an upper cassette 40 and a lower cassette 44. It should be understood that the upper and lower cassettes 40, 44 may have corresponding components and features that are similar, if not identical, to the center cassette 42. Furthermore, the terms upper and lower are used to indicate the relative position of the cassettes shown in the figures and are not meant to be limiting. By way of non-limiting example, the upper, center, and lower cassettes 40, 42, 44 each may include a cell-retainer frame assembly 24 having a retainer frame plate 22 mated onto a separator plate 28 as previously described above.

Referring to Fig. 2, the center cassette 42 is shown engaged to the separator plate 28 of the upper cassette 40 and the retainer frame plate 22 of the lower cassette. The retainer plate sealing surface 36a of the center cassette 42 is adjacent to and oriented toward the corresponding separator plate sealing surface 36b of the immediate adjacent upper cassette 40. The separator plate sealing surface 36b of the center cassette is immediately adjacent to and oriented toward the retainer plate sealing surface 36a of the adjacent lower cassette 44. Inserted between the corresponding sealing surfaces 36a, 36b of the adjacent cassettes is the glass seal 41. The perimeter portions 33, 34 of the retainer frame plates 22 and separator plates 28, respectively, of the cassettes 40, 42, 42 onto which a glass seals 41 is disposed defines a plurality of perforations 46. The perforations include through-holes 48 that lead from the sealing surfaces 36a, 36b of the respective plates to the interior surfaces 53 of the respective plates. The through-holes 48 may be substantially perpendicular to the sealing surfaces 36a, 36b or may be at an angle with respect to the sealing surfaces 36a, 36b. Each of the through-holes includes an interior opening 50 and an exterior opening 52, in which the interior opening 50 is facing the interior of the cassette and the exterior opening 52 is facing the sealing surface 36a, 36b of the adjacent cassette.

During the assembly of the cassettes as describe above, a glass seal composite, in the form of a paste or tape, is disposed between the sealing surface 36a, 36b of the retainer frame plate 22 of the center cassette 42 and the separator plate 28 of the upper cassette 40. A glass seal composite is also disposed between the sealing surfaces 36a, 36b of the retainer frame plate 22 of the lower cassette 44 and the separator plate 28 of the center cassette 42. An axial compression force F is placed onto the assembled SOFC stack 26 while the glass composite is heated treated to flash off any volatile binder and cure the gas seal composite, thereby joining and bonding the center cassette 42 to both the upper and lower cassettes 40, 44, and as well as providing a hermetic seal between the cassettes 40, 42, 44. During the heat treatment process, the glass seal composite transitions into a partially molten state. As the cassettes 40, 42, 44 are compressed to set the SOFC stack 26, a portion of the molten glass composite flows into the through-holes 48 under pressure and capillary forces. As the partially molten glass exits the opposite interior openings 50 of the through-holes 48, the adhesion force of the glass causes the molten glass to conglomerate onto a portion of the interior surface 53 surrounding each of the interior opening 50 forming a flared glass end 62 that has a diameter larger than the diameter of the through-holes 48. As the glass composite cools, a glass column 63 is formed within each of the through-holes 48 and cooperates with the flared glass end 62 to interlock the compliant glass seal 41 onto the respective sealing surfaces 36a, 36b of the cassettes 40, 42, 44. The increased in surface area provided by the perforations 46 also assists in the adhesion of the glass seal to the respective sealing surfaces 36a, 36b.

Shown in Fig. 3, and in detail view Fig. 3a, is an alternative embodiment of the invention. For illustrative purposes, only the retainer frame plate 22 of the center cassette 42 is shown joined to the separator plate 28 of the upper cassette 40 with a glass seal 42 therebetween. Similarly to the embodiment as shown in Fig. 2, the perforations 46 shown in Fig. 3 include through-holes 48 that lead from the sealing surfaces 36a, 36b of the respective plates to the interior surfaces 53 of the respective plates with associated exterior openings 52 and interior openings 50. In the embodiment shown in Fig. 3, the respective sealing surfaces 36a, 36b of the retainer frame plate 22 and separator plate 28 define a plurality of protrusions 56 having a conical, frustoconical, or semi-spherical shape. Each of the exterior opening 52 is defined substantially within the center of a protrusion 56 as shown in Fig. 3a. On the interior surface 53 opposite that of the sealing surface 36a, 36b, each of the interior openings 50 defines a depression 60 on a portion of the interior surface 53 surrounding the interior opening 50.

Similarly to the embodiment shown in Fig. 2, during the heat treatment process, as the cassettes are compressed to set the SOFC stack, a portion of the molten glass composite flows into the through-holes 48. As the partially molten glass exits the opposite interior openings 50 of the through-holes 48, adhesion forces cause the molten glass composite to conglomerate within and about the depressions 60. The depressions 60 assist in molding the molten glass into a flared glass end 62 of a predetermined shape and size based on the shape and size of the depressions 60. As the glass composite cools and solidifies into the glass seal 41, the glass seal 41 forms a glass column 63 within each of the through-holes 48 that cooperates with the flared glass end 62 to interlock the compliant glass seal 41 onto the respective sealing surfaces 36a, 36b of the adjacent cassettes 42, 44. The protrusions 56 may be aligned and sized to provide and maintain a predetermined gap distance between adjacent cassettes and may be offset to allow a narrower gap between the cassettes 42, 44, thereby maintaining a predetermined thickness of the glass seal 41.

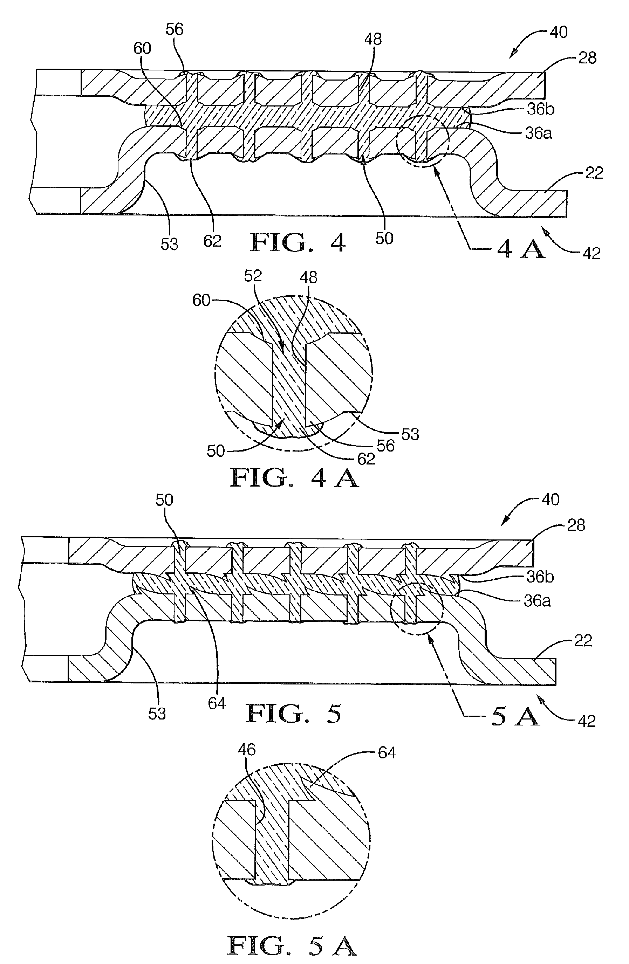

Fig. 4 and detailed Fig. 4a show another alternative embodiment of the invention. In contrast to the embodiment shown in Fig. 3, the frustoconical shaped protrusion 56 surrounds the peripheral of the interior opening 50 and the conical shaped depression 60 surround the exterior opening 52. The conical shaped depression 60 defined in the sealing surfaces 36a, 36b shown in Fig. 4a aids in funneling the flow of the molten glass composite into the through-holes 48 during the heat treatment process of curing the glass composite. Also, the frustoconical shaped protrusions increases the interior surface area and provides a tow-hook onto which the flared glass end 62 may be conglomerated onto and locked into. In the embodiments shown in Figs 3 and 4, the features of the through-holes having protrusions and depressions may be formed by any mechanical means known in the art including puncturing, piercing, extruding, lancing, and drawing.

Shown in Fig. 5 is another alternative embodiment of the invention in which the sealing surfaces 36a, 36b are skived to provide a plurality of edge shaped protrusions 64. Therebetween the edge shaped protrusions 64 are a plurality of perforations 46 as described above. The edged shaped protrusions 64 assist in locking the glass seal 41 as well as providing additional surface area for the glass seal 41 to bond onto the metallic substrate of the plates. The perforations 46 are shown between the skived edges.

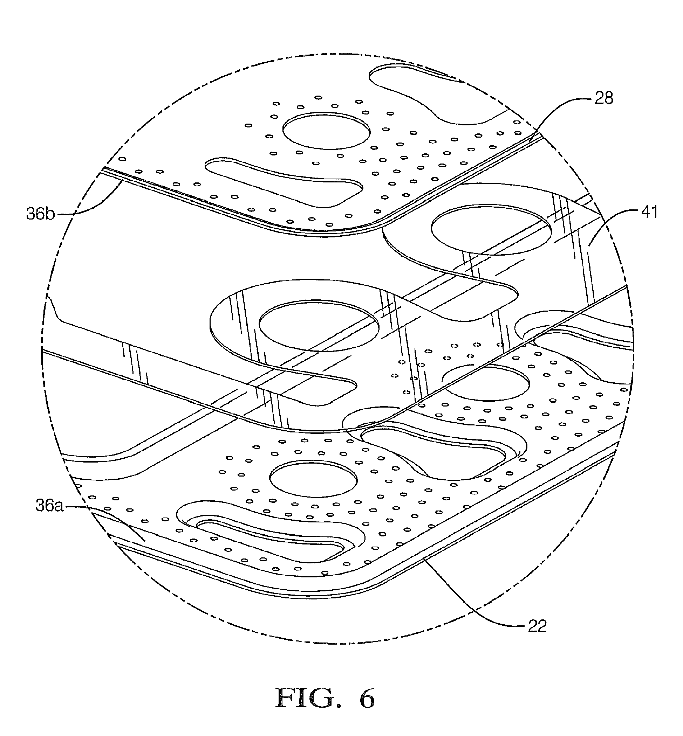

The features of the perforations, depressions, and protrusions as shown in Figs. 2 through 5 increase the active surface area for which the glass seal 41 may bond onto and provide tow-hooks to interlock the glass seal 41. Shown in Fig. 6 is a perspective exploded view of the retainer frame plate 22 of the center cassette 42 and the adjacent separator plate 28 of the upper cassette 40 of Fig 2. The plurality of protrusions 56 on the sealing surfaces 36a, 36b and corresponding depressions on the non-sealing interior surfaces 53 with through-holes 48 therethrough is similar to the texture of that of a fine cheese grater. The interlocking features disclosed above provide increased adhesion strength between the glass seal and the metallic substrate that is mechanically stable under long-term operation and thermal cycling conditions, does not contaminate or otherwise adversely affect fuel cell performance, and yet economical to produce.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the intentions without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A fuel cell stack (26) comprising:
a first cassette (32a,32b,32c,32d) having a first cassette portion defining a first cassette sealing surface (36a);
a second cassette (32a,32b,32c,32d) having a second cassette portion defining a second cassette sealing surface (36b) complementary to said first cassette sealing surface, wherein said second cassette is disposed proximate to said first cassette such that said second cassette sealing surface is oriented toward and immediately adjacent to said first cassette sealing surface; and
a glass seal (41) disposed between and onto said first and second cassette sealing surfaces, thereby joining said first cassette to said second cassette;
wherein said first cassette portion defines a plurality of perforations (46) configured to receive a portion of said glass seal to interlock said glass seal to said first cassette sealing surface.

2. The cell stack (26) of claim 1,
wherein said first cassette portion includes a first cassette interior surface (53) opposite that of said first cassette sealing surface (36a);
wherein at least one of said perforations (46) includes an exterior opening (52) on said first cassette sealing surface (36a), an interior opening (50) opposite that of said exterior opening on said first cassette interior surface (53), and a through-hole (48) through between said openings;
wherein said portion of said glass seal (41) is received in said at least one perforation (46) forming a glass column (63) in said through-hole and a flared glass end (62) on a portion of said first cassette interior surface surrounding said interior opening; and
wherein said flared glass end cooperates with said glass column such that said glass seal is interlocked onto said first cassette sealing surface.

3. The cell stack (26) of claim 2, wherein one of said first cassette sealing surface (36a) and first cassette interior surface (53) defines a protrusion (56,64) surrounding respective one of said exterior opening (52) and interior opening (50).

4. The cell stack (26) of claim 3, wherein said protrusion (56,64) includes a shape selected from a group of shapes consisting of conical, frustoconical, and semi-spherical.

5. The cell stack (26) of claim 3, wherein said protrusion (56,64) includes a sharp edge formed by skiving one of respective said interior and exterior surfaces.

6. The cell stack (26) of claim 3, wherein other of said first cassette sealing surface (36a) and first cassette interior surface (53) defines a depression (60) surrounding respective one of said exterior opening (52) and interior opening (50).

7. The cell stack (26) of claim 2, wherein one of said first cassette sealing surface (36a) and first cassette interior surface (53) defines a depression (60) surrounding respective one of said exterior opening (52) and interior opening (50).

8. The cell stack (26) of claim 1, wherein said cell stack is a solid oxide fuel stack.

9. The cell stack (26) of claim 2, wherein said flared glass end (62) includes a flared glass end diameter and said through-hole (48) includes a through-hole diameter, and wherein said flared glass end diameter is greater than said through-hole diameter.

10. A solid oxide fuel cell cassette (40,42,44) comprising,
a cassette portion defining a plurality of perforations (46), wherein said perforations are configured to receive and retain a portion of a glass seal (41).

11. The solid oxide fuel cell cassette (40,42,44) of claim 10,
wherein said cassette portion defines a sealing surface (36a,36b) and an interior surface (53) opposite of said sealing surface; and
wherein at least one of said perforations (46) includes an exterior opening (52) on said sealing surface and an interior opening (50) opposite that of said exterior opening (52) on said interior surface (53), and a through-hole (48) there between said openings;
wherein one of said sealing surface and said interior surface defines a protrusion (56,64) surrounding respective one of said exterior opening (52) and interior opening (50).

12. The solid oxide fuel cell cassette (40,42,44) of claim 11, wherein other of said sealing surface (36a,36b) and said interior surface (53) defines a depression (60) surrounding respective one of said exterior opening (52) and interior opening (50).

13. The solid oxide fuel cell cassette (40,42,44) of claim 10,
wherein said cassette portion defines a sealing surface (36a,36b) and an interior surface (53) opposite of said sealing surface; and
wherein at least one of said perforations(46) includes an exterior opening (52) on said sealing surface and an interior opening (50) opposite that of said exterior opening on said interior surface (53), and a through-hole (48) there between;
wherein one of said sealing surface and said interior surface defines a depression (60) surrounding respective one of said exterior opening (52) and interior opening (50).

14. The solid oxide fuel cell cassette (40,42,44) of claim 11, wherein said protrusion (56,64) includes a shape selected from a group of shapes consisting of conical, frustoconical, and semi-spherical.

15. The solid oxide fuel cell cassette (40,42,44) of claim 11, wherein said protrusion (56,64) includes a sharp edge formed by skiving one of respective said interior (53) and exterior surfaces.
